# EUROPÄISCHE PATENTSCHRIFT

(11) **EP 3 085 582 B1**
(45) Veröffentlichungstag und Bekanntmachung des Hinweises auf die Patenterteilung: **28.02.2018**
(21) Anmeldenummer: 16159414.8
(22) Anmeldetag: 09.03.2016
(51) Int. Cl.: H04N 5/225, B60R 11/04, B60R 11/00

(54) **VORRICHTUNG MIT EINER KAMERAEINHEIT UND EINEM DECKELELEMENT**
DEVICE COMPRISING A CAMERA UNIT AND A COVER ELEMENT
DISPOSITIF DOTE D'UNE CAMERA ET D'UN ELEMENT DE RECOUVREMENT

(30) Priorität: 24.04.2015 DE 102015106394
(43) Veröffentlichungstag der Anmeldung: 26.10.2016
(73) Patentinhaber: Huf Hülsbeck & Fürst GmbH & Co. KG, 42551 Velbert (DE)
(72) Erfinder: BUSS, Wolfgang, 42697 Solingen (DE)
(74) Vertreter: Zenz Patentanwälte Partnerschaft mbB

(56) Entgegenhaltungen:
- DE-A1-102010 060 573
- DE-A1-102012 025 626
- DE-A1-102013 111 224

## Beschreibung

Die Erfindung richtet sich auf eine Vorrichtung mit einer Kameraeinheit mit einem Objektiv zur Bilderfassung des Außenbereiches eines Kraftfahrzeugs, einer Trägerbaugruppe, die eine Durchgangsöffnung aufweist und in welcher die Kameraeinheit zwischen einer in die Trägerbaugruppe zurückgezogenen Ruheposition und einer Aktivposition, in welcher die Kameraeinheit zumindest abschnittsweise aus der Durchgangsöffnung der Trägerbaugruppe nach außen hervorsteht, bewegbar aufgenommen ist, einem Deckelelement, das zwischen einer die Durchgangsöffnung der Trägerbaugruppe verschließenden Schließstellung und einer Öffnungsstellung bewegbar ausgebildet ist, und einer Bewegungsmechanik zur Bewegung der Kameraeinheit und des Deckelelements, wobei die Bewegungsmechanik ein erstes Schwenkelement, das mit seinem ersten Längsende um eine erste Drehachse an der Trägerbaugruppe verschwenkbar gelagert ist und das mit seinem zweiten Längsende gelenkig mit einer ersten Gelenkachse der Kameraeinheit verbunden ist, und ein zweites Schwenkelement, das mit seinem ersten Längsende um eine zweite Drehachse an der Trägerbaugruppe verschwenkbar gelagert ist und das mit seinem zweiten Längsende gelenkig mit einer zweiten Gelenkachse der Kameraeinheit verbunden ist, umfasst.

Eine Vorrichtung der Eingangs bezeichneten Art nach dem Oberbegriff von Anspruch 1 ist zum Beispiel aus der DE 10 2013 111 224 A1 bekannt.

Vorrichtungen mit einer Kameraeinheit, die zur Bilderfassung des Außenbereiches eines Kraftfahrzeugs dienen, sind aus dem Stand der Technik bereits bekannt. Derartige Vorrichtungen umfassen eine Kameraeinheit, die in einem Gehäuse der Kameraeinheit zwischen einer Ruheposition und einer Aktivposition beweglich aufgenommen ist. Beispielsweise können derartige Kameraeinheiten im Bereich des assistierten Einparkens von Kraftfahrzeugen zum Einsatz kommen. Wird beispielsweise der Rückwärtsgang des Kraftfahrzeugs eingelegt, verfährt die Kameraeinheit von der Ruheposition in die Aktivposition, wobei die Kameraeinheit wenigstens teilweise aus dem Gehäuse herausgefahren wird. Dadurch wird der Bereich hinter dem Kraftfahrzeug durch die Kameraeinheit bildlich erfasst und auf einem Display für den Fahrer des Kraftfahrzeugs angezeigt. Ist die Rückwärtsfahrt beendet und nimmt der Fahrer des Kraftfahrzeugs den Rückwärtsgang wieder heraus, kann die Kameraeinheit von der Aktivposition wieder zurück in die Ruheposition verschwenken.

Um die Kameraeinheit zumindest in der Ruheposition vor Verunreinigungen zu schützen, ist ein Deckelelement vorgesehen, durch welches die Öffnung, durch die die Kameraeinheit aus dem Gehäuse der Kameraeinheit herausfährt, in der Ruheposition verschlossen werden kann. Folglich muss beim Übergang von der Ruheposition in die Aktivposition der Kameraeinheit das Deckelelement zugleich zwischen einer Schließstellung und einer Öffnungsstellung bewegt werden.

Aus der DE 10 2010 060 573 A1 ist eine Kameravorrichtung bekannt, welche eine Trägerbaugruppe, ein Deckelelement, eine Kameraeinheit und eine Bewegungsmechanik umfasst. Die Bewegungsmechanik weist ein erstes Schwenkelement auf, das an der Trägerbaugruppe schwenkbar gelagert ist und gelenkig mit der Kameraeinheit verbunden ist. Ein zweites Schwenkelement ist an der Trägerbaugruppe schwenkbar gelagert und gelenkig mit dem Deckelelement verbunden. Ein drittes Schwenkelement ist an der Trägerbaugruppe schwenkbar gelagert und mit dem Deckelelement verbunden.

Eine Vorrichtung ist zum Beispiel aus der DE 10 2012 025 626 A1 bekannt. Bei dieser bekannten Vorrichtung zur Aufnahme einer Kameraeinheit ist in einem Gehäuse ein Schlitten bewegbar untergebracht, an welchem die Kameraeinheit befestigbar ist. Der Schlitten wird durch ein Getriebe angetrieben, welches Schaukelelemente aufweist, die mit dem Schlitten gelenkig verbunden sind. Jedes Schaukelelement ist um eine ortsfeste Achse am Gehäuse verschwenkbar. Nachteilig bei diesem Stand der Technik ist es, dass das Deckelelement schwenkbar an der Außenseite des Gehäuses gelagert ist und beim Aufschwenken ein entsprechender Raumbedarf an der Außenseite des Gehäuses vorhanden sein muss, was die Kompaktheit der Vorrichtung mit Kameraeinheit und Deckelelement negativ beeinträchtigt.

Ferner ist aus der DE 10 2007 052 402 eine Vorrichtung mit einer Kameraeinheit bekannt, die zur Bilderfassung des Außenbereiches eines Kraftfahrzeugs dient. Die Bewegung der darin offenbarten Kameraeinheit und die relativ zu der Kameraeinheit erfolgende Bewegung des offenbarten Deckelelementes umfasst mehrere Bewegungsschritte, so dass eine komplexe kinematische Ansteuerung des Deckelelementes erforderlich ist. Insbesondere erfordert die hierin offenbarte Vorrichtung zur Bewegung der Kameraeinheit und des Deckelelementes einen erheblichen Bauraum.

Der Erfindung liegt die Aufgabe zugrunde eine Lösung zu schaffen, die auf konstruktiv einfache Weise und kostengünstig eine Vorrichtung mit einer Kameraeinheit und einem Deckelelement bereitstellt, die einen geringen Bauraum benötigt und die sich gleichzeitig durch einen gering gehaltenen Bewegungsweg auszeichnet, was die Zeitspanne für das Ausfahren der Kamera knapp halten kann.

Bei einer Vorrichtung der Eingangs bezeichneten Art wird die Aufgabe erfindungsgemäß dadurch gelöst, dass die Bewegungsmechanik ein drittes Schwenkelement, das mit seinem ersten Längsende um die erste Drehachse an der Trägerbaugruppe verschwenkbar gelagert ist und das mit seinem zweiten Längsende mit dem Deckelelement verbunden ist, umfasst.

Vorteilhafte und zweckmäßige Ausgestaltungen und Weiterbildungen der Erfindung ergeben sich aus den Unteransprüchen.

Durch die Erfindung wird eine Vorrichtung mit einer Kameraeinheit zur Bilderfassung des Außenbereiches eines Kraftfahrzeugs zur Verfügung gestellt, die sich durch eine funktionsgerechte Konstruktion auszeichnet und einen kostengünstigen Aufbau aufweist. Erfindungsgemäß ist ein Mechanismus mit einer Bewegungsmechanik vorgesehen, bei welcher das erste Schwenkelement und das zweite Schwenkelement an einer jeweiligen ortsfesten Drehachse gelagert sind. Diese doppelte Lagerung der Kameraeinheit über die zugeordneten Schwenkelemente bewirkt, dass die Bewegung der Kameraeinheit eine Schwenkbewegung mit kompakter Verfahrkurve bzw. Bewegungskurve auf engstem Raume ist. Folglich wird die Kameraeinheit durch die beiden Schwenkelemente derart um die Drehachsen geführt, dass der Platz zur Aufnahme der Kameraeinheit auf ein Mindestmaß reduziert wird und die Vorrichtung folglich einen einfachen Aufbau mit wenig Bauraum erfordert. Aufgrund der kompakten Verfahrkurve kann durch die Erfindung die Zeitspanne für das Ausfahren der Kameraeinheit auf ein Mindestmaß reduziert werden. Ferner kann das Deckelelement starr an dem zweiten Längsende des dritten Schwenkelements angeordnet sein. Dadurch, dass sowohl das erste Schwenkelement als auch das dritte Schwenkelement um die erste Drehachse an der Trägerbaugruppe verschwenkbar gelagert sind, kann eine Bewegungskopplung von erstem und drittem Schwenkelement vorgesehen sein, durch die eine Schwenkbewegung um die erste Drehachse dann gleichzeitig eine Bewegung des Deckelelements aus der Schließstellung in die Öffnungsstellung und eine Bewegung der Kameraeinheit aus der Ruheposition in die Aktivposition bewirkt, wodurch schließlich die Kameraeinheit zusätzlich innerhalb kürzester Zeit einsatzbereit ist.

In Ausgestaltung der Erfindung ist vorgesehen, dass die Bewegung der Kameraeinheit aus der Ruheposition in die Aktivposition der Bewegung des Deckelelements aus der Schließstellung in die Öffnungsstellung entgegengesetzt ist. Auf diese Weise wird ein Minimum an Zeit aufgewandt, um die Kameraeinheit in die Aktivposition zu bewegen, denn indem die Kameraeinheit in ihre Aktivposition verschwenkt wird, wird zur gleichen Zeit das Deckelelement derart verschwenkt, dass es die Durchgangsöffnung der Trägerbaugruppe freigibt.

Von besonderem Vorteil ist es in Ausgestaltung der Erfindung, wenn die Bewegung der Kameraeinheit aus der Ruheposition in die Aktivposition gleichzeitig zu der Bewegung des Deckelelements aus der Schließstellung in die Öffnungsstellung erfolgt und bei diesen Bewegungen der Kameraeinheit sowie des Deckelelements die jeweiligen Schwenkbewegungen des ersten Schwenkelements und des dritten Schwenkelements den gleichen Drehsinn aufweisen. Denn durch den gleichen Drehsinn ist es möglich, unter anderem einen einzigen Antriebsmotor zu verwenden, welcher dafür sorgt, dass die Kameraeinheit und das Deckelelement gleichzeitig bewegt werden.

Damit das Deckelelement einen knapp bemessenen Bewegungsweg bei seiner Bewegung aus der Schließstellung in die Öffnungsstellung und zurück aufweist, wodurch der Bauraum noch kompakter und kleiner Ausfallen kann, ist in weiterer Ausgestaltung der Erfindung vorgesehen, dass das zweite Längsende des dritten Schwenkelements gelenkig mit einer ersten Gelenkachse des Deckelelements verbunden ist, und dass die Bewegungsmechanik ein viertes Schwenkelement aufweist, das mit seinem ersten Längsende um eine dritte Drehachse an der Trägerbaugruppe verschwenkbar gelagert ist und das mit seinem zweiten Längsende gelenkig mit einer zweiten Gelenkachse der Kameraeinheit verbunden ist.

In weiterer Ausgestaltung der Vorrichtung sieht die Erfindung vor, dass der Abstand zwischen der ersten und zweiten Gelenkachse des Deckelelements größer ist als der Abstand zwischen der ersten und zweiten Gelenkachse der Kameraeinheit und/oder als der Abstand zwischen der ersten und dritten Drehachse der Trägerbaugruppe. Auf diese Weise kann die Kameraeinheit auf einem wesentlich kleineren Bewegungsweg verschwenkt werden als das Deckelelement, was auch erwünscht ist. Denn das Deckelelement muss in erster Linie nur derart bewegt werden, dass es die Durchgangsöffnung freigibt, wohingegen die Kameraeinheit gezielt verschwenkt werden muss, um auf den gewünschten Außenbereich ausgerichtet zu sein, den sie erfassen soll.

Für einen besonders kompakten Verfahrweg bzw. Bewegungsweg hat es sich gezeigt, dass es von Vorteil ist, wenn die Drehachsen der Trägerbaugruppe mit Bezug auf die Kameraeinheit vom Objektiv der Kameraeinheit hin zu dem dem Objektiv abgewandten Längsende der Kameraeinheit hintereinanderliegend angeordnet sind.

Besonders günstig ist es dabei, wenn in Ausgestaltung der erfindungsgemäßen Vorrichtung bei Anordnung der Kameraeinheit in der Ruheposition die dritte Drehachse in Nähe des Objektives der Kameraeinheit und die erste Drehachse in Nähe des dem Objektiv abgewandten Längsendes der Kameraeinheit angeordnet sind, wobei die zweite Drehachse zwischen der ersten und dritten Drehachse angeordnet ist.

Des Weiteren ist es für eine kompakte Ausgestaltung der Vorrichtung von Vorteil, wenn das erste und zweite Schwenkelement die Kameraeinheit bei ihrer Bewegung aus der Ruheposition in die Aktivposition um die erste und zweite Drehachse der Trägerbaugruppe verschwenken, während das dritte und vierte Schwenkelement das Deckelelement bei seiner Bewegung aus der Schließstellung in die Öffnungsstellung um die zweite und dritte Drehachse der Trägerbaugruppe verschwenken.

Ebenso günstig für eine kompakt gebaute Vorrichtung sowie für eine Kameraeinheit, die auf engstem Bauraum verfahrbar und bewegbar sein muss, ist es in Ausgestaltung der Erfindung, dass der Abstand zwischen der ersten und zweiten Gelenkachse der Kameraeinheit größer ist als der Abstand zwischen der ersten und zweiten Drehachse der Trägerbaugruppe.

Die Erfindung sieht in weiterer Ausgestaltung vor, dass die erste Gelenkachse der Kameraeinheit an dem dem Objektiv der Kameraeinheit abgewandten Längsende der Kameraeinheit an dieser angeordnet ist und dass die zweite Gelenkachse der Kameraeinheit zwischen dem Objektiv und der ersten Gelenkachse der Kameraeinheit an dieser angeordnet ist. Vorzugsweise ist die zweite Gelenkachse in etwa in der Mitte zwischen dem Objektiv der Kameraeinheit und dem dem Objektiv abgewandten Längsende der Kameraeinheit angeordnet, so dass die Kameraeinheit mit ihrem hinteren Abschnitt sehr effektiv über die zwei Gelenkachsen auf engstem Raume in die Aktivposition gedreht bzw. verschwenkt werden kann.

Ebenso ist es im Hinblick auf eine kompakt gebaute Vorrichtung und einer auf engstem Raume verschwenkbaren Kameraeinheit von Vorteil, wenn die erste und zweite Drehachse der Trägerbaugruppe näher liegend zu der Durchgangsöffnung angeordnet sind als die erste und zweite Gelenkachse der Kameraeinheit.

Besonders effizient ist es in Ausgestaltung der Erfindung, wenn die erste Drehachse und/oder die dritte Drehachse antriebsverbunden ausgebildet sind/ist. Eine Ausbildung, bei welcher nur die dritte Drehachse antriebsverbunden ist, hat den Vorteil, dass bei Vereisung des Deckelelements, d.h. wenn das Deckelelement an der Durchgangsöffnung angefroren ist, ein Antrieb entsprechend stark auf die Drehachse wirken kann, diese Wirkung aber keine Beschädigung der Kameraeinheit nach sich zieht, was demgegenüber bei einer angetriebenen ersten Drehachse, an welcher die Kameraeinheit direkt gelagert ist, der Fall sein könnte.

Schließlich sieht die Erfindung in weiterer Ausgestaltung vor, dass das erste Schwenkelement und das dritte Schwenkelement ein gemeinsames monolithisches Bauteil bilden und das erste Längsende des ersten Schwenkelements mit dem ersten Längsende des dritten Schwenkelements verbunden ist, wobei das erste Schwenkelement zum dritten Schwenkelement abgewinkelt ausgebildet ist. Auf diese Weise kann die Anzahl der Drehachsen und sogar der einzelnen Bauteile reduziert werden.

Es sei angemerkt, dass im Sinne der Erfindung unter einer Trägerbaugruppe sowohl ein separates Gehäuse, in welcher die erfindungsgemäße Anordnung mit Kameraeinheit, Deckelelement und Bewegungsmechanik aufgenommen ist und die in der Fahrzeugkarosserie eingebaut werden kann, als auch eine Einbuchtung in der Fahrzeugkarosserie, in welcher die erfindungsgemäße Anordnung mit Kameraeinheit, Deckelelement und Bewegungsmechanik eingesetzt und montiert werden kann, zu verstehen ist. Die Aufgabe der Trägerbaugruppe erschöpft sich in der Funktion, die Anordnung mit Kameraeinheit, Deckelelement und Bewegungsmechanik aufzunehmen.

Ebenso sind im Sinne der Erfindung unter einer Drehachse und einer Gelenkachse Achsen zu verstehen, um die sich etwas, was daran gelagert ist, drehen kann. Dabei muss es keine Achse im Sinne eines stangenförmigen Elements oder einer angetriebenen Stange sein. Es kann sich bei den Drehachsen und Gelenkachsen der vorliegenden Erfindung sogar auch um Dreh- und Gelenkpunkte handeln, an denen ein Element punktuell drehbar gelagert bzw. angebracht ist. Ferner kann es sich bei den Schwenkelementen der vorliegenden Erfindung um Arme handeln, die bei punktueller Anbringung nur auf einer Seite der Kameraeinheit angebracht sind und sich dort erstrecken. Andererseits soll die vorliegende Erfindung nicht auf dieses Verständnis beschränkt sein, denn bei stangenförmigen bzw. armförmig ausgebildeten Dreh- und Gelenkachsen kann es sich bei den Schwenkelementen um zweiarmige bzw. doppelarmige Elemente handeln, die beidseitig der Kameraeinheit und endseitig der stangenförmigen Dreh- und Gelenkachsen angeordnet sind und parallel zueinander verlaufen. Im Sinne der Erfindung ist unter einem Schwenkelement somit sowohl eine einarmige als auch zweiarmige Ausführung, wie es vorstehend beschrieben ist, zu verstehen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 ein schematisch dargestelltes Kraftfahrzeug mit einer exemplarisch angedeuteten erfindungsgemäßen Vorrichtung,
Figur 2 eine perspektivische Darstellung einer Kameraeinheit, eines Deckelelements und einer Bewegungsmechanik der erfindungsgemäßen Vorrichtung bzw. Anordnung,
Figur 3 eine perspektivische Einzelteildarstellung der Kameraeinheit, des Deckelelements und der Bewegungsmechanik,
Figur 4 die erfindungsgemäße Vorrichtung in einer Seitenansicht mit der in ihrer Ruheposition angeordneten Kameraeinheit und
Figur 5 die erfindungsgemäße Vorrichtung in einer weiteren Seitenansicht mit der in ihrer Aktivposition angeordneten Kameraeinheit.

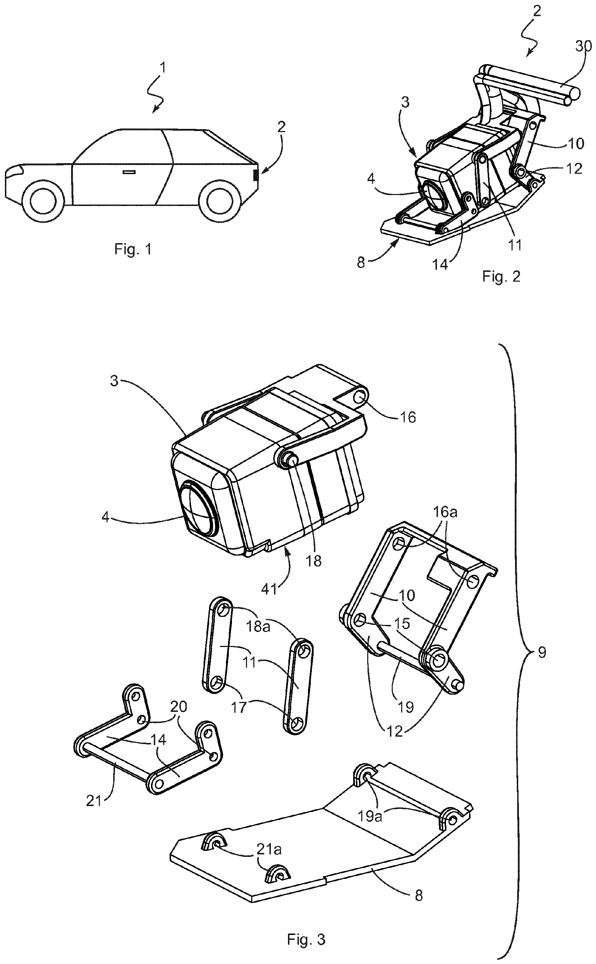

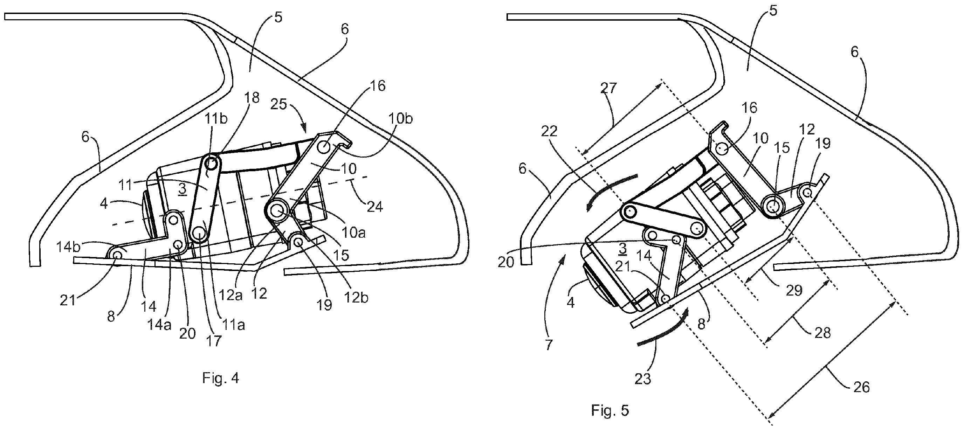

Figur 1 zeigt eine Seitenansicht eines Kraftfahrzeugs 1, welches an seinem Heck oder an seiner Stoßstange eine Ausführungsform einer Vorrichtung 2 gemäß der vorliegenden Erfindung aufweist. Wie Figur 2 zeigt, umfasst die Vorrichtung 2 eine Kameraeinheit 3, die zur Bilderfassung des Außenbereiches des Kraftfahrzeugs 1 dient und zu diesem Zweck mit einem Objektiv 4 und einer Verkabelung 30 ausgestattet ist. Die Kameraeinheit 3 ist mit Bezug auf die Figuren 4 und 5 in einer Einbuchtung 5 einer Trägerbaugruppe 6 untergebracht. Dabei ist die Kameraeinheit 3 mit einem Mechanismus, auf den noch im Folgenden eingegangen wird, zwischen einer Ruheposition (siehe Figur 4) und einer Aktivposition (siehe Figur 5) in der Trägerbaugruppe 6 bewegbar aufgenommen. In der Ruheposition ist die Kameraeinheit 3 in der Trägerbaugruppe 6 zurückgezogen und geschützt in der Einbuchtung 5 der Trägerbaugruppe 6 angeordnet, wohingegen die Kameraeinheit 3 in der Aktivposition zumindest abschnittsweise aus einer Durchgangsöffnung 7 der Trägerbaugruppe 6 nach außen hervorsteht und aus der Durchgangsöffnung 7 nach unten herausragt. In der Ruheposition der Kameraeinheit 3 verschließt ein in den Figuren 2 bis 5 gezeigtes Deckelelement 8 die Durchgangsöffnung 7 der Trägerbaugruppe 6, die Teil der Karosserie des Kraftfahrzeugs 1 oder ein separates Gehäuse sein kann, welches in die Karosserie des Kraftfahrzeugs 1 einbaubar ist. Das Deckelelement 8 selbst ist zwischen einer Schließstellung (siehe Figur 4), in welcher es die Durchgangsöffnung 7 der Trägerbaugruppe 6 verschließt, und einer Öffnungsstellung (siehe Figur 5), in welcher das Deckelelement 8 die Durchgangsöffnung 7 für die Kameraeinheit 3 freigibt, bewegbar ausgebildet. Mit Hilfe des Deckelelements 8 ist die Kameraeinheit 3 vor Umwelteinflüssen wie Regen, Staub, Sonneneinstrahlung, Schmutz und auch vor einem möglichen Diebstahl geschützt. Dabei erfolgt die Bewegung des Deckelelements 8 mit dem gleichen Mechanismus, der auch die Kameraeinheit 3 bewegt.

Um die Kameraeinheit 3 und das Deckelelement 8 entsprechend zu bewegen, ist in den Figuren 2 bis 5 der vorstehend angesprochene Mechanismus dargestellt, der nachstehend als Bewegungsmechanik 9 bezeichnet wird. Die Bewegungsmechanik 9 zur gleichzeitigen Bewegung der Kameraeinheit 3 und des Deckelelements 8 weist ein erstes Schwenkelement 10, ein zweites Schwenkelement 11, ein drittes Schwenkelement 12 und ein viertes Schwenkelement 14 auf. Da die Kameraeinheit 3 von diesen Schwenkelementen bewegt wird, zählt im eigentlichen Sinne auch die Kameraeinheit 3 zu der Bewegungsmechanik 9, wie es in Figur 23 durch die geschweifte Klammer angedeutet ist. Die Schwenkelemente 10, 11, 12, 14 sind hebelförmig und stangenförmig ausgebildet. In dem dargestellten Ausführungsbeispiel bilden das erste Schwenkelement 10 und das dritte Schwenkelement 12 ein gemeinsames monolithisches Bauteil, wobei das erste Längsende 10a des ersten Schwenkelements 10 mit dem ersten Längsende 12a des dritten Schwenkelements 12 starr bzw. drehfest verbunden ist. Dabei ist das erste Schwenkelement 10 abgewinkelt an dem dritten Schwenkelement 12 angeformt. Die stangenförmigen Schwenkelemente 10, 11, 12, 14 sind ferner als doppelarmige Schwenkarme ausgeführt, wobei sich die beiden Arme, die einem einzelnen Schwenkelement zugeordnet sind, seitlich von der Kameraeinheit 3 angeordnet sind und sich dort erstrecken.

Wie beispielsweise aus den Figuren 3, 4 und 5 ersichtlich ist, ist das erste Schwenkelement 10 mit seinem ersten Längsende 10a um eine erste Drehachse 15 an der Trägerbaugruppe 6 verschwenkbar gelagert und mit seinem zweiten Längsende 10b gelenkig mit einer ersten Gelenkachse 16 der Kameraeinheit 3 verbunden, wobei das Schwenkelement 10 über die Aufnahmeöffnungen 16a an der ersten Gelenkachse 16 gelagert ist (siehe Figur 3). Ferner ist das zweite Schwenkelement 11 mit seinem ersten Längsende 11a um eine zweite Drehachse 17 an der Trägerbaugruppe 6 verschwenkbar gelagert und mit seinem zweiten Längsende 11b gelenkig mit einer zweiten Gelenkachse 18 der Kameraeinheit 3 verbunden, wobei auch hier das Schwenkelement 11 entsprechende Aufnahmeöffnungen 18a aufweist, über die das Schwenkelement 11 an der zweiten Gelenkachse 18 gelagert ist (siehe auch Figur 3). Darüber hinaus ist das dritte Schwenkelement 12 mit seinem ersten Längsende 12a um die erste Drehachse 15 an der Trägerbaugruppe 6 verschwenkbar gelagert und mit seinem zweiten Längsende 12b mit dem Deckelelement 8 verbunden. Insbesondere ist das zweite Längsende 12b des dritten Schwenkelements 12 gelenkig mit einer ersten Gelenkachse 19 des Deckelelements 9 verbunden. Das Deckelelement 9 weist Aufnahmeöffnungen 19a auf, über die es an der ersten Gelenkachse 19 gelagert ist bzw. durch die das Deckelelement 9 relativ zu der Kameraeinheit 3 verschwenkbar ist. Schließlich ist das vierte Schwenkelement 14 mit seinem ersten Längsende 14a um eine dritte Drehachse 20 an der Trägerbaugruppe 6 verschwenkbar gelagert und mit seinem zweiten Längsende 14b gelenkig mit einer zweiten Gelenkachse 21 der Kameraeinheit 6 verbunden. Das Deckelelement 9 weist weitere Aufnahmeöffnungen 21a für die zweite Gelenkachse 21 auf, durch die das Deckelelement 9 relativ zu dem dritten Schwenkelement 12 sowie der Kameraeinheit 3 verschwenkbar bzw. drehbar ist.

Wie beispielsweise aus Figur 3 zu erkennen ist, sind die Schwenkelemente 10, 11, 12 und 14 - wie vorstehend bereits angemerkt - doppelarmig ausgebildet. Dabei erstreckt sich das Arm-Paar eines jeweiligen Schwenkelements 10, 11 seitlich der Kameraeinheit 3. Zum einen ist ein Arm-Paar eines entsprechenden Schwenkelements 10, 11 über die entsprechende Achse, die auch Gelenkpunkte (siehe beispielsweise die erste Gelenkachse 16 der Kameraeinheit 3) sein können, an der Kameraeinheit 3 oder an dem Deckelelement 8 direkt angebracht. Zum anderen ist ein Arm-Paar eines entsprechenden Schwenkelements 12, 14 über entsprechende, quer verlaufende Achsen (siehe beispielsweise die erste Gelenkachse 19 des Deckelelements 8) miteinander verbunden. Demgegenüber sind die an der Trägerbaugruppe 6 ausgebildeten Drehachsen 15, 17, 20 zapfenförmig und paarweise an der Wandung der Trägerbaugruppe ausgebildet und stehen mit entsprechenden Aufnahmen an den paarartig ausgebildeten Schwenkelementen 10 und 12, 11, 14 in Wirkverbindung, so dass sich die Schwenkelemente 10 und 12, 11, 14 um die zugeordneten Drehachsen drehen bzw. verschwenken können.

Um die Kameraeinheit 3 aus der Ruheposition in die Aktivposition zu bewegen, ist entweder die erste Drehachse 15 drehfest mit dem ersten und dritten Schwenkelement 10, 12 oder die dritte Drehachse 20 mit dem vierten Schwenkelement 14 drehfest verbunden und darüber hinaus antriebsverbunden ausgebildet, so dass eine Drehung der antriebsverbundenen ersten oder dritten Drehachse 15 bzw. 20 zu einer Verschwenkung des ersten und dritten Schwenkelements 10, 12 bzw. des vierten Schwenkelements 14 führt. Als Antriebseinheit kommt ein bekannter Elektromotor in Betracht, auf den hier aber nicht näher eingegangen werden soll. Alternativ könnte auch die Kameraeinheit 3 mit einem Antrieb verbunden sein, der dafür sorgt, dass die Kameraeinheit 3 zwischen der Ruheposition und der Aktivposition bewegt wird.

Wenn die erste Drehachse 15 antriebsverbunden ist, dann wird über das erste Schwenkelement 10 die Kameraeinheit 3 und über das dritte Schwenkelement 12 das Deckelelement 8 verschwenkt, wohingegen bei einer Antriebsverbindung der dritten Drehachse 20 nur das Deckelelement 8 direkt verschwenkt wird und die Verschwenkung des Deckelelements 8 über das dritte Schwenkelement 12 die Kameraeinheit 3 mit verschwenkt. Dabei ist die Bewegung der Kameraeinheit 3 aus der Ruheposition in die Aktivposition (siehe Pfeil 22 in Figur 5) der Bewegung des Deckelelements 8 aus der Schließstellung in die Öffnungsstellung (siehe Pfeil 23 in Figur 5) entgegengesetzt ist. Das Deckelelement 8 wird bei seiner Bewegung aus der Schließstellung in die Öffnungsstellung eng an der Kameraeinheit 3 in eine von dem Objektiv 4 weg weisende Richtung bewegt, wobei die Bewegung des Deckelelements 8 entlang der Unterseite 31 der Kameraeinheit 3 verläuft. Wie insbesondere der Figur 5 zu entnehmen ist, taucht das Deckelelement 8 bei seiner Bewegung aus der Schließstellung bis zu seiner Öffnungsstellung zumindest abschnittsweise in die Einbuchtung 5 der Trägerbaugruppe 6 ein. Mit anderen Worten ist das Deckelelement 8 in seiner Öffnungsstellung wenigstens teilweise in der Einbuchtung 5 der Trägerbaugruppe 6 eintauchend angeordnet. Allerdings ist das Deckelelement 8 in der Öffnungsposition nicht vollständig sondern nur so weit aus der Durchgangsöffnung 7 heraus bewegt, dass wenigstens das Objektiv 4 der Kameraeinheit 3 zur Erfassung des Außenbereiches des Kraftfahrzeugs 1 aus dem freigegebenen Bereich der Durchgangsöffnung 8 herausfahren kann.

Damit eine Bewegung 22 der Kameraeinheit 3 und eine Bewegung 23 des Deckelelements 8 auf engstem Bauraum möglich ist, ist es von Bedeutung, dass die verschiedenen Drehachsen 15, 17, 20, die an der Trägerbaugruppe 6 ausgebildet und dadurch ortsfest angeordnet sind, in einer bestimmten Reihenfolge entlang einer Längsachse 24 der Kameraeinheit 3 (siehe Figur 4) angeordnet sind. Die Drehachsen 15, 17, 20 der Trägerbaugruppe 6 sind mit Bezug auf die Kameraeinheit 6 bzw. deren Längsachse 24 vom Objektiv 4 der Kameraeinheit 3 hin zu dem dem Objektiv 4 abgewandten Längsende 25 (siehe Figur 4) der Kameraeinheit 3 hintereinanderliegend angeordnet. Insbesondere sind - bei Anordnung der Kameraeinheit 3 in der Ruheposition - die dritte Drehachse 20 in Nähe des Objektives 4 der Kameraeinheit 3 und die erste Drehachse 15 in Nähe des dem Objektiv 4 abgewandten Längsendes 25 der Kameraeinheit 3 angeordnet. Dabei ist die zweite Drehachse 17 zwischen der ersten und dritten Drehachse 15 und 20 angeordnet.

Ferner ist es so, dass die erste Gelenkachse 16 der Kameraeinheit 3 an dem dem Objektiv 4 der Kameraeinheit 3 abgewandten Längsende 25 der Kameraeinheit 3 an dieser angeordnet ist. Demgegenüber ist die zweite Gelenkachse 18 der Kameraeinheit 3 zwischen dem Objektiv 4 und der ersten Gelenkachse 16 der Kameraeinheit 3 an dieser angeordnet. Die erste und zweite Gelenkachse 16, 18 der Kameraeinheit 3 sind oberhalb der Drehachsen 15, 17, 20 angeordnet, egal ob die Kameraeinheit 3 in ihrer Ruheposition oder Aktivposition angeordnet ist. Dadurch sind die erste und zweite Drehachse 15, 17 der Trägerbaugruppe 6 näherliegend zu der Durchgangsöffnung 7 angeordnet als die erste und zweite Gelenkachse 16, 18 der Kameraeinheit 3.

Um die Zeitdauer kurz zu halten, bis die Kameraeinheit 3 aus der Ruheposition in die Aktivposition bewegt und einsatzbereit ist, sieht die Erfindung vor, dass die Bewegung der Kameraeinheit 3 aus der Ruheposition in die Aktivposition gleichzeitig zu der Bewegung des Deckelelements 8 aus der Schließstellung in die Öffnungsstellung erfolgt. Während sich also das Deckelelement 8 aus der Schließstellung in die Öffnungsstellung bewegt, bewegt sich die Kameraeinheit 3 zur gleichen Zeit aus der Ruheposition in die Aktivposition. Bei den Bewegungen der Kameraeinheit 3 und des Deckelelements 8 weisen die jeweiligen Schwenkbewegungen 22, 23 des ersten und dritten Schwenkelements 10, 12 den gleichen Drehsinn auf, wobei auch das zweite und vierte Schwenkelement 11, 14 diesen Drehsinn aufweisen, der bei einer Bewegung der Kameraeinheit 3 in die Aktivposition bzw. des Deckelelements 8 in die Öffnungsstellung entgegen dem Uhrzeigersinn gerichtet ist.

Um zusätzlich zu der wenig Zeit beanspruchenden Bewegung auch den Platzbedarf zur Bewegung der Kameraeinheit 3 und des Deckelelements 8 auf ein Minimum zu reduzieren, ist es wichtig, dass der Abstand 26 zwischen der ersten und zweiten Gelenkachse 19, 21 des Deckelelements 8 größer ist als der Abstand 27 zwischen der ersten und zweiten Gelenkachse 16, 18 der Kameraeinheit 3 (siehe Figur 5). Ebenso ist es dabei von Bedeutung, dass der Abstand 26 zwischen der ersten und zweiten Gelenkachse 19, 21 des Deckelelements 8 größer ist als der Abstand 28 zwischen der ersten und dritten Drehachse 15, 20 der Trägerbaugruppe 6, wie aus Figur 5 ersichtlich ist. Durch diese Anordnung lässt sich dann eine Bewegung mit minimalem Platzbedarf realisieren, wenn das erste und zweite Schwenkelement 10, 12 die Kameraeinheit 3 bei ihrer Bewegung aus der Ruheposition in die Aktivposition um die erste und zweite Drehachse 15, 17 der Trägerbaugruppe 6 verschwenken, während gleichzeitig das dritte und vierte Schwenkelement 12, 14 das Deckelelement 8 bei seiner Bewegung aus der Schließstellung in die Öffnungsstellung um die zweite und dritte Drehachse 17, 20 der Trägerbaugruppe 6 verschwenken, wie ein Vergleich der Figuren 4 und 5 zeigt. Für eine Bewegung der Kameraeinheit 3 und des Deckelelements 8 auf engstem Raume ist es dann noch günstig, wenn der Abstand 27 zwischen der ersten und zweiten Gelenkachse 16, 18 der Kameraeinheit 3 größer ist als der Abstand 29 zwischen der ersten und zweiten Drehachse 15, 17 der Trägerbaugruppe 6 (siehe Figur 5).

Für die in dem Ausführungsbeispiel gezeigte Erfindung ist es charakteristisch, dass die vier Gelenkachsen 16, 18, 19, 21 ihre relative Position während der Bewegungen der Kameraeinheit 3 und des Deckelelements 8 zueinander verändert. So ist in der Schließstellung des Deckelelements 8 die erste Gelenkachse 19 des Deckelelements 8 zwischen dem Objektiv 4 und der ersten Gelenkachse 16 der Kameraeinheit 3 angeordnet, wohingegen in der Öffnungsstellung des Deckelelements 8 die erste Gelenkachse 16 der Kameraeinheit 3 zwischen dem Objektiv 4 und der ersten Gelenkachse 19 des Deckelelements 8 angeordnet ist.

Zusammenfassend umfasst die erfindungsgemäße Vorrichtung 2, die genauer gesagt auch eine erfindungsgemäße Anordnung ist, die Kameraeinheit 3 mit dem Objektiv 4 zur Bilderfassung des Außenbereiches des Kraftfahrzeugs 1, die Trägerbaugruppe 6, die die Durchgangsöffnung 7 aufweist und innerhalb der die Kameraeinheit 3 zwischen der in die Trägerbaugruppe 6 zurückgezogenen Ruheposition und der Aktivposition, in der die Kameraeinheit 3 zumindest abschnittsweise aus der Durchgangsöffnung 7 der Trägerbaugruppe 6 nach außen hervorsteht, bewegbar aufgenommen ist. Ferner gehört das Deckelelement 8 zu der Vorrichtung 2, das zwischen einer die Durchgangsöffnung 7 der Trägerbaugruppe 6 verschließenden Schließstellung und einer Öffnungsstellung bewegbar ausgebildet ist. Ebenso zählt die Bewegungsmechanik 9 zur Bewegung der Kameraeinheit 3 und des Deckelelements 8 zu der Vorrichtung 1. Dabei umfasst die Bewegungsmechanik 9 das erste Schwenkelement 10, das mit seinem ersten Längsende 10a um die erste Drehachse 15 an der Trägerbaugruppe 6 verschwenkbar gelagert ist und das mit seinem zweiten Längsende 10b gelenkig mit der ersten Gelenkachse 16 der Kameraeinheit 3 verbunden ist, das zweite Schwenkelement 11, das mit seinem ersten Längsende 11a um die zweite Drehachse 17 an der Trägerbaugruppe 6 verschwenkbar gelagert ist und das mit seinem zweiten Längsende 11b gelenkig mit der zweiten Gelenkachse 18 der Kameraeinheit 3 verbunden ist, und das dritte Schwenkelement 12, das mit seinem ersten Längsende 12a um die erste Drehachse 15 an der Trägerbaugruppe 6 verschwenkbar gelagert ist und das mit seinem zweiten Längsende 12b mit dem Deckelelement 8 verbunden ist.

## Patentansprüche

1. Vorrichtung (2) mit
einer Kameraeinheit (3) mit einem Objektiv (4) zur Bilderfassung des Außenbereiches eines Kraftfahrzeugs (1),
einer Trägerbaugruppe (6), die eine Durchgangsöffnung (7) aufweist und in welcher die Kameraeinheit (3) zwischen einer in die Trägerbaugruppe (6) zurückgezogenen Ruheposition und einer Aktivposition, in welcher die Kameraeinheit (3) zumindest abschnittsweise aus der Durchgangsöffnung (7) der Trägerbaugruppe (6) nach außen hervorsteht, bewegbar aufgenommen ist,
einem Deckelelement (8), das zwischen einer die Durchgangsöffnung (7) der Trägerbaugruppe (6) verschließenden Schließstellung und einer Öffnungsstellung bewegbar ausgebildet ist, und
einer Bewegungsmechanik (9) zur Bewegung der Kameraeinheit (3) und des Deckelelements (8),
wobei die Bewegungsmechanik (9) ein erstes Schwenkelement (10), das mit seinem ersten Längsende (10a) um eine erste Drehachse (15) an der Trägerbaugruppe (6) verschwenkbar gelagert ist und das mit seinem zweiten Längsende (10b) gelenkig mit einer ersten Gelenkachse (16) der Kameraeinheit (3) verbunden ist, und ein zweites Schwenkelement (11), das mit seinem ersten Längsende (11a) um eine zweite Drehachse (17) an der Trägerbaugruppe (6) verschwenkbar gelagert ist und das mit seinem zweiten Längsende (11b) gelenkig mit einer zweiten Gelenkachse (18) der Kameraeinheit (3) verbunden ist, umfasst,
**dadurch gekennzeichnet, dass**
die Bewegungsmechanik (9) ein drittes Schwenkelement (12), das mit seinem ersten Längsende (12a) um die erste Drehachse (15) an der Trägerbaugruppe (6) verschwenkbar gelagert ist und das mit seinem zweiten Längsende (12b) mit dem Deckelelement (8) verbunden ist, umfasst.

2. Vorrichtung (2) nach Anspruch 1, **dadurch gekennzeichnet, dass** die Bewegung der Kameraeinheit (6) aus der Ruheposition in die Aktivposition der Bewegung des Deckelelements (8) aus der Schließstellung in die Öffnungsstellung entgegengesetzt ist.

3. Vorrichtung (2) nach Anspruch 1 oder 2, **dadurch gekennzeichnet, dass** die Bewegung der Kameraeinheit (3) aus der Ruheposition in die Aktivposition gleichzeitig zu der Bewegung des Deckelelements (8) aus der Schließstellung in die Öffnungsstellung erfolgt und bei diesen Bewegungen der Kameraeinheit (3) sowie des Deckelelements (8) die jeweilige Schwenkbewegung des ersten und dritten Schwenkelements (10, 12) den gleichen Drehsinn aufweist.

4. Vorrichtung (2) nach einem der vorhergehenden Ansprüche, **dadurch gekennzeichnet, dass** das zweite Längsende (12b) des dritten Schwenkelements (12) gelenkig mit einer ersten Gelenkachse (19) des Deckelelements (8) verbunden ist, und dass die Bewegungsmechanik (9) ein viertes Schwenkelement (14) aufweist, das mit seinem ersten Längsende (14a) um eine dritte Drehachse (20) an der Trägerbaugruppe (6) verschwenkbar gelagert ist und das mit seinem zweiten Längsende (14b) gelenkig mit einer zweiten Gelenkachse (21) der Kameraeinheit (3) verbunden ist

5. Vorrichtung (2) nach Anspruch 4, **dadurch gekennzeichnet, dass** der Abstand (26) zwischen der ersten und zweiten Gelenkachse (19, 21) des Deckelelements (8) größer ist als der Abstand (27) zwischen der ersten und zweiten Gelenkachse (16, 18) der Kameraeinheit (3) und/oder als der Abstand (28) zwischen der ersten und dritten Drehachse (15, 20) der Trägerbaugruppe (6).

6. Vorrichtung (2) nach Anspruch 4 oder 5, **dadurch gekennzeichnet, dass** die Drehachsen (15, 17, 20) der Trägerbaugruppe (6) mit Bezug auf die Kameraeinheit (3) vom Objektiv (4) der Kameraeinheit (3) hin zu dem dem Objektiv (4) abgewandten Längsende (25) der Kameraeinheit (3) hintereinanderliegend angeordnet sind.

7. Vorrichtung (2) nach einem der Ansprüche 4 bis 6,
**dadurch gekennzeichnet, dass** bei Anordnung der Kameraeinheit (3) in der Ruheposition die dritte Drehachse (20) in Nähe des Objektives (4) der Kameraeinheit (3) und die erste Drehachse (15) in Nähe des dem Objektiv (4) abgewandten Längsendes (25) der Kameraeinheit (3) angeordnet sind, wobei die zweite Drehachse (17) zwischen der ersten und dritten Drehachse (15, 17) angeordnet ist.

8. Vorrichtung (2) nach einem der Ansprüche 4 bis 7,
**dadurch gekennzeichnet, dass** das erste und zweite Schwenkelement (10, 12) die Kameraeinheit (3) bei ihrer Bewegung aus der Ruheposition in die Aktivposition um die erste und zweite Drehachse (15, 17) der Trägerbaugruppe (6) verschwenken, während das dritte und vierte Schwenkelement (12, 14) das Deckelelement (8) bei seiner Bewegung aus der Schließstellung in die Öffnungsstellung um die zweite und dritte Drehachse (17, 20) der Trägerbaugruppe (6) verschwenken.

9. Vorrichtung (2) nach einem der Ansprüche 4 bis 8,
**dadurch gekennzeichnet, dass** die erste Drehachse (15) und/oder die dritten Drehachse (20) antriebsverbunden ausgebildet sind/ist.

10. Vorrichtung (2) nach einem der vorhergehenden Ansprüche, **dadurch gekennzeichnet, dass** der Abstand (27) zwischen der ersten und zweiten Gelenkachse (16, 18) der Kameraeinheit (3) größer ist als der Abstand (29) zwischen der ersten und zweiten Drehachse (15, 17) der Trägerbaugruppe (6).

11. Vorrichtung (2) nach einem der vorhergehenden Ansprüche, **dadurch gekennzeichnet, dass** die erste Gelenkachse (16) der Kameraeinheit (3) an dem dem Objektiv (4) der Kameraeinheit (3) abgewandten Längsende (25) der Kameraeinheit (3) an dieser angeordnet ist und dass die zweite Gelenkachse (18) der Kameraeinheit (3) zwischen dem Objektiv (4) und der ersten Gelenkachse (16) der Kameraeinheit (3) an dieser angeordnet ist.

12. Vorrichtung (2) nach einem der vorhergehenden Ansprüche, **dadurch gekennzeichnet, dass** die erste und zweite Drehachse (15, 17) der Trägerbaugruppe (6) näherliegend zu der Durchgangsöffnung (7) angeordnet sind als die erste und zweite Gelenkachse (16, 18) der Kameraeinheit (3).

13. Vorrichtung (2) nach einem der vorhergehenden Ansprüche, **dadurch gekennzeichnet, dass** das erste Schwenkelement (10) und das dritte Schwenkelement (12) ein gemeinsames monolithisches Bauteil bilden und das erste Längsende (10a) des ersten Schwenkelements (10) mit dem ersten Längsende (12a) des dritten Schwenkelements (12) verbunden ist, wobei das erste Schwenkelement (10) zum dritten Schwenkelement (12) abgewinkelt ausgebildet ist.

## Claims

1. A device (2), with
a camera unit (3) with an objective (4) for purposes of capturing the image of the exterior region of a motor vehicle (1),
a support module (6), which has a passage opening (7) and in which the camera unit (3) is accommodated such that it can move between an inactive position, retracted into the support module (6), and an active position in which the camera unit (3) at least partially protrudes outwards from the passage opening (7) of the support module (6),
a cover element (8) which is designed such that it can move between a closed position, in which it closes the passage opening (7) of the support module (6), and an open position, and
a movement mechanism (9) for purposes of moving the camera unit (3) and the cover element (8), wherein
the movement mechanism (9) comprises a first pivotal element (10), which with its first longitudinal end (10a) is pivotally mounted about a first axis of rotation (15) on the support module (6), and with its second longitudinal end (10b) is pivotally connected with a first axis of articulation (16) of the camera unit (3), and a second pivotal element (11), which with its first longitudinal end (11a) is pivotally mounted about a second axis of rotation (17) on the support module (6), and with its second longitudinal end (11b) is pivotally connected with a second axis of articulation (18) of the camera unit (3),
**characterised in that**
the movement mechanism (9) comprises a third pivotal element (12), which with its first longitudinal end (12a) is pivotally mounted about the first axis of rotation (15) on the support module (6), and with its second longitudinal end (12b) is connected with the cover element (8).

2. The device (2) in accordance with claim 1,
**characterised in that** the movement of the camera unit (3) from the inactive position into the active position is opposed to the movement of the cover element (8) from the closed position to the open position.

3. The device (2) in accordance with claim 1 or 2,
**characterised in that** the movement of the camera unit (3) from the inactive position into the active position occurs at the same time as the movement of the cover element (8) from the closed position to the open position, and during these movements of the camera unit (3) and the cover element (8) the respective pivotal movement of the first and third pivotal elements (10, 12) has the same direction of rotation.

4. The device (2) in accordance with one of the preceding claims, **characterised in that** the second longitudinal end (12b) of the third pivotal element (12) is pivotally connected with a first axis of articulation (19) of the cover element (8), and **in that** the movement mechanism (9) has a fourth pivotal element (14), which with its first longitudinal end (14a) is pivotally mounted about a third axis of rotation (20) on the support module (6), and which, with its second longitudinal end (14b), is pivotally connected with a second axis of articulation (21) of the camera unit (3) .

5. The device (2) in accordance with claim 4,
**characterised in that** the distance (26) between the first and second axes of articulation (19, 21) of the cover element (8) is greater than the distance (27) between the first and second axes of articulation (16, 18) of the camera unit (3) and/or than the distance (28) between the first and third axes of rotation (15, 20) of the support module (6).

6. The device (2) in accordance with claim 4 or 5,
**characterised in that** with respect to the camera unit (3), from the objective (4) of the camera unit (3) to the longitudinal end (25) of the camera unit (3) facing away from the objective (4), the axes of rotation (15, 17, 20) of the support module (6) are arranged one behind another.

7. The device (2) in accordance with one of the claims 4 to 6, **characterised in that** with the camera unit (3) arranged in the inactive position, the third axis of rotation (20) is arranged in the vicinity of the objective (4) of the camera unit (3), and the first axis of rotation (15) is arranged in the vicinity of the longitudinal end (25) of the camera unit (3) facing away from the objective (4), wherein the second axis of rotation (17) is arranged between the first and third axes of rotation (15, 17).

8. The device (2) in accordance with one of the claims 4 to 7, **characterised in that** the first and second pivotal elements (10, 12) pivot the camera unit (3) about the first and second axes of rotation (15, 17) of the support module (6) as they move from the inactive position to the active position, while the third and fourth pivot elements (12, 14) pivot the cover element (8) in its movement from the closed position to the open position about the second and third axes of rotation (17, 20) of the support module (6) .

9. The device (2) in accordance with one of the claims 4 to 8, **characterised in that** the first axis of rotation (15) and/or the third axis of rotation (20) are/is designed to be connected to a drive.

10. The device (2) in accordance with one of the preceding claims, **characterised in that** the distance (27) between the first and second axes of articulation (16, 18) of the camera unit (3) is greater than the distance (29) between the first and second axes of rotation (15, 17) of the support module (6).

11. The device (2) in accordance with one of the preceding claims, **characterised in that** the first axis of articulation (16) of the camera unit (3) is arranged on the camera unit (3), on the longitudinal end (25) of the latter facing away from the objective (4) of the camera unit (3), and **in that** the second axis of articulation (18) of the camera unit (3) between the objective (4) and the first axis of articulation (16) of the camera unit (3) is arranged on the latter.

12. The device (2) in accordance with one of the preceding claims, **characterised in that** the first and second axes of rotation (15, 17) of the support module (6) are arranged closer to the passage opening (7) than the first and second axes of articulation (16, 18) of the camera unit (3).

13. The device (2) in accordance with one of the preceding claims, **characterised in that** the first pivotal element (10) and the third pivotal element (12) form a common monolithic component, and the first longitudinal end (10a) of the first pivotal element (10) is connected to the first longitudinal end (12a) of the third pivotal element (12), wherein the first pivotal element (10) is angled with respect to the third pivotal element (12).

## Revendications

1. Dispositif (2) doté
d'une caméra (3) avec un objectif (4) pour la saisie d'images de la zone extérieure d'un véhicule automobile (1),
d'un ensemble de support (6), qui comporte une ouverture de passage (7) et dans lequel la caméra (3) est logée pouvant être mobile entre une position de repos reculée dans l'ensemble de support (6) et une position active dans laquelle la caméra (3) ressort au moins par section de l'ouverture de passage (7) de l'ensemble de support (6) vers l'extérieur,
d'un élément de recouvrement (8), qui est constitué mobile entre une position de fermeture fermant l'ouverture de passage (7) de l'ensemble de support (6) et une position d'ouverture, et
d'un mécanisme de déplacement (9) pour déplacer la caméra (3) et l'élément de recouvrement (8),
le mécanisme de déplacement (9) comprenant un premier élément pivotant (10), qui est logé pouvant pivoter sur l'ensemble de support (6) avec sa première extrémité longitudinale (10a) autour d'un premier axe de rotation (15) et qui est relié avec sa deuxième extrémité longitudinale (10b) de façon articulée à un premier axe d'articulation (16) de la caméra (3) et un deuxième élément pivotant (11) qui est logé pouvant pivoter sur l'ensemble de support (6) avec sa première extrémité longitudinale (11a) autour d'un deuxième axe de rotation (17) et qui est relié avec sa deuxième extrémité longitudinale (11b) de façon articulée à un deuxième axe d'articulation (18) de la caméra (3),
**caractérisé en ce que**
le mécanisme de déplacement (9) comprend un troisième élément pivotant (12) qui est logé pouvant pivoter sur l'ensemble de support (6) avec sa première extrémité longitudinale (12a) autour du premier axe de rotation (15) et qui est relié à l'élément de recouvrement (8) avec sa deuxième extrémité longitudinale (12b).

2. Dispositif (2) selon la revendication 1, **caractérisé en ce que** le mouvement de la caméra (3) de la position de repos à la position active est opposé au mouvement de l'élément de recouvrement (8) de la position de fermeture à la position d'ouverture.

3. Dispositif (2) selon la revendication 1 ou 2,
**caractérisé en ce que** le mouvement de la caméra (3) a lieu de la position de repos à la position active simultanément au mouvement de l'élément de recouvrement (8) de la position de fermeture à la position d'ouverture et le mouvement de pivotement respectif du premier et du troisième élément pivotant (10, 12) présente lors de ces mouvements de la caméra (3) ainsi que de l'élément de recouvrement (8), le même mouvement de rotation.

4. Dispositif (2) selon l'une quelconque des revendications précédentes, **caractérisé en ce que** la deuxième extrémité longitudinale (12b) du troisième élément pivotant (12) est reliée de façon articulée à un premier axe d'articulation (19) de l'élément de recouvrement (8) et **en ce que** le mécanisme de déplacement (9) comporte un quatrième élément pivotant (14) qui est logé pouvant pivoter sur l'ensemble de support (6) avec sa première extrémité longitudinale (14a) autour d'un troisième axe de rotation (20) et qui est relié de façon articulée avec sa deuxième extrémité longitudinale (14b) à un deuxième axe d'articulation (21) de la caméra (3).

5. Dispositif (2) selon la revendication 4, **caractérisé en ce que** la distance (26) entre le premier et le deuxième axe d'articulation (19, 21) de l'élément de recouvrement (8) est supérieure à la distance (27) entre le premier et le deuxième axe d'articulation (16, 18) de la caméra (3) et/ou à la distance (28) entre le premier et le troisième axe de rotation (15, 20) de l'ensemble de support (6).

6. Dispositif (2) selon la revendication 4 ou 5,
**caractérisé en ce que** les axes de rotation (15, 17, 20) de l'ensemble de support (6) sont disposés l'un derrière l'autre par rapport à la caméra (3) depuis l'objectif (4) de la caméra (3) à l'extrémité longitudinale (25) de la caméra (3) opposée à l'objectif (4) .

7. Dispositif (2) selon l'une quelconque des revendications 4 à 6, **caractérisé en ce que** lors de la mise en place de la caméra (3) dans la position de repos, le troisième axe de rotation (20) est disposé à proximité de l'objectif (4) de la caméra (3) et le premier axe de rotation (15) à proximité de l'extrémité longitudinale (25) de la caméra (3) opposée à l'objectif (4), le deuxième axe de rotation (17) étant disposé entre le premier et le troisième axe de rotation (15, 17).

8. Dispositif (2) selon l'une quelconque des revendications 4 à 7, **caractérisé en ce que** le premier et le deuxième élément pivotant (10, 12) font pivoter la caméra (3) lors de son déplacement de la position de repos à la position active autour du premier et du deuxième axe de rotation (15, 17) de l'ensemble de support (6), alors que le troisième et le quatrième axe de pivotement (12, 14) font pivoter l'élément de recouvrement (8) lors de son déplacement de la position de fermeture à la position d'ouverture autour du deuxième et du troisième axe de rotation (17, 20) de l'ensemble de support (6).

9. Dispositif (2) selon l'une quelconque des revendications 4 à 8, **caractérisé en ce que** le premier axe de rotation (15) et/ou le troisième axe de rotation (20) sont/est constitué(s) relié(s) en entraînement.

10. Dispositif (2) selon l'une quelconque des revendications précédentes, **caractérisé en ce que** la distance (27) entre le premier et le deuxième axe d'articulation (16, 18) de la caméra (3) est supérieure à la distance (29) entre le premier et le deuxième axe de rotation (15, 17) de l'ensemble de support (6).

11. Dispositif (2) selon l'une quelconque des revendications précédentes, **caractérisé en ce que** le premier axe d'articulation (16) de la caméra (3) est disposé sur celle-ci sur l'extrémité longitudinale (25) de la caméra (3), opposée à l'objectif (4) de la caméra (3) et **en ce que** le deuxième axe d'articulation (18) de la caméra (3) est disposé sur celle-ci entre l'objectif (4) et le premier axe d'articulation (16) de la caméra (3).

12. Dispositif (2) selon l'une quelconque des revendications précédentes, **caractérisé en ce que** le premier et le deuxième axe de rotation (15, 17) de l'ensemble de support (6) sont disposés plus proches de l'ouverture de passage (7) que le premier et le deuxième axe d'articulation (16, 18) de la caméra (3).

13. Dispositif (2) selon l'une quelconque des revendications précédentes, **caractérisé en ce que** le premier élément pivotant (10) et le troisième élément pivotant (12) forment un composant commun monolithique et la première extrémité longitudinale (10a) du premier élément pivotant (10) est reliée à la première extrémité longitudinale (12a) du troisième élément pivotant (12), le premier élément pivotant (10) étant constitué coudé par rapport au troisième élément pivotant (12).
